# EUROPEAN PATENT SPECIFICATION

(11) **EP 2 796 636 B1**
(45) Date of publication and mention of the grant of the patent: **21.10.2015**
(21) Application number: 13165499.8
(22) Date of filing: 26.04.2013
(51) Int. Cl.: E04F 13/02, B32B 13/14

(54) **Process for preparing a surface for decoration**
Verfahren zum Vorbereiten einer Oberfläche zur Dekoration
Procédé de préparation d'une surface pour décoration

(43) Date of publication of application: 29.10.2014
(73) Proprietor: Sika Technology AG, 6340 Baar (CH)
(72) Inventor: Hennemann, Pascal, 45721 Haltern (DE); Schmidt, Henning, 45721 Haltern am See (DE)
(74) Representative: Sika Patent Attorneys

(56) References cited:
- DE-A1- 3 607 438
- DE-A1- 19 848 693
- GB-A- 2 029 765
- GB-A- 2 447 578

## Description

The present invention relates to a process for preparing a surface for decoration. The invention also relates to a multilayer structure obtainable by the process, and to a kit of parts for carrying out the process.

A process of the above-mentioned type is known from United States patent US 3044919. This document describes a surfacing or facing construction particularly adaptable for application on wall and ceiling areas or surfaces and to a method or system of applying the surfacing or facing to an area, the construction embodying a thin mat, layer or sheet of mineral material adapted to be adhesively joined to the surface or area to be finished. The process involves the application of an adhesive, paint, mastic or coating material to the obverse face or surface of the mat or sheet of mineral fibres in such a manner that the adhesive, paint, mastic or coating material penetrates through the interstices or pores in the mat to adhesively join the mat or sheet to the wall surface and concomitantly therewith impregnate the mat and form a surface or facing film which is substantially smooth.

A drawback of the known process is that it does not provide for the bridging of major cracks or holes in the walls, as they may be encountered in the course of renovation. Furthermore, the process requires application of an adhesive, paint, mastic or coating material in such a manner that it penetrates through interstices or pores in the mat.

Therefore, an ongoing need exists for processes having improved covering of cracks and holes in the surface, as well as improved overall efficiency.

The invention now provides a process for preparing a building surface for decoration comprising the steps of
a) application of a water-based surfacer material to the building surface, wherein the surfacer comprises, on a dry basis:
   i) 25 to 65% by weight of cementitious material,
   ii) 5 to 60% by weight of a light-weight filler,
   iii) 2 to 20% by weight of organic polymer powder, and
   iv) optionally, further additives
b) application of a glass fibre-based non-woven sheet having an area density in the range of 100 to 250 g/m² onto the wet surfacer, and wherein one surface of the sheet is adhered to the wet surfacer.

The process according to the invention has the following advantages: the surfacer has a long pot life after mixing with water, a very good and improved covering of cracks in the surface, and a very good adhesion to the surface. The process gives rise to increased efficiency, because additional surface preparation steps, such as sanding or other steps to level or flatten the surface, can be omitted. Wall paper or paint can be directly applied to the surface created by the process.

The water-based surfacer material comprises a cementitious material. The cementitious material typically is a hydraulic cement. Examples of suitable cementitious materials are pozzolan-lime cement, calcium aluminate cement, calcium sulfo aluminate cement, blast furnace cement, and Portland cement. Portland cement is preferred. In the dry mixture, the cementitious material is present in an amount of 25 to 65% by weight, or 35 to 60% by weight, and preferably 45 to 55% by weight.

The surfacer further comprises a light-weight filler. Light-weight fillers typically have a density of less than 2,000 kg/m³, preferably less than 1,500 g/m³, and particularly preferred less than 1,200 kg/m³. Examples of suitable light-weight fillers are small hollow spheres of glass, or ceramic material or polymeric material; sintered foam glass; expanded mica; expanded or foamed clay; and expanded slate. In the dry mixture, the light-weight filler is present in an amount of 5 to 60% by weight, typically, 25 to 50% by weight, preferably 33 to 45% by weight.

The surfacer further comprises an organic polymer powder. Such polymer powders are typically obtained by (spray) drying of aqueous polymer dispersions. Examples of suitable polymers are acrylic polymers and copolymers, copolymers of ethylene or other monomers and vinyl acetate, homo-polymers of vinylacetate, or (co)polymers of other vinyl esters. The polymer powder is generally present in the dry mixture in an amount of 2 to 20% by weight, typically, 5 to 15% by weight.

The surfacer may comprise further additives in known amounts in order to optimize the properties. Examples of suitable additives are curing accelerators, curing retarders, preservatives, pigments, liquefiers, thickeners, such as cellulose derivatives, dispersants, and anti-foaming agents.

Other examples of further additives are fillers and extenders. Examples of suitable fillers and extenders are calcium carbonate or silica based materials in a particle size range of 1 - 300 µm, preferably 5 - 100 µm.

The surfacer is typically provided as a dry powder wherein the above-mentioned components i), ii), iii), and iv) add up to 100%. The powder is usually mixed with water at the site of construction in order to prepare the liquid surfacer ready for application. The amount of water depends on the required viscosity of the liquid surfacer. Generally, between 30 and 70 liters of water are used per 100 kg of dry powder to make the liquid surfacer, preferred are 40 to 55 liters of water per 100 kg of dry powder. The viscosity of the liquid surfacer can vary, and is suitably adjusted depending on the type of surface to be prepared. Large cracks or deep holes in the surface to be prepared, or a higher layer thickness of the surfacer will generally require a higher viscosity surfacer.

The preferred application technique may also influence the optimum viscosity. The surfacer can be applied to the building surface by any suitable method, such as spraying, rolling, or using a trowel. The surfacer can be applied with conventional application equipment.

Examples of suitable building surfaces are concrete surfaces, brick walls, tiles, wood, and existing coating layers.

Needless to say, the surface should have sufficient mechanical stability. It is preferred that significant amounts of dirt and debris are removed from the surface. Therefore, in certain embodiments, the process of the invention comprises the additional step of cleaning the building surface and/or removing non-sustainable layers from the building surface prior to application of the water-based surfacer material.

The amount of surfacer applied depends on the structure of the surface. When the surface is relatively even and free of large cracks or holes, the amount of wet surfacer applied usually is in the range of 100 g/m² to 2,000 g/m², preferably 300 g/m² to 1,200 g/m². When the surface is relatively uneven and/or highly structured with cracks and holes, the amount of wet surfacer applied is in the range of 500 g/m² to 3,000 g/m², typically in the range of 1,000 g/m² to 2,000 g/m².

The wet surfacer typically has a long pot life and can be used for a period of up to 8 hours after mixing the dry powder with water.

In the process of the invention use is made of a glass fibre-based non-woven sheet having an area density in the range of 100 to 250 g/m², preferably the area density of the sheet is in the range 110 to 150 g/m².

The glass fibre-based non-woven sheet may have an organic coating, for example by application of an aqueous dispersion or organic solvent solution of an organic polymer.

In a preferred embodiment, the glass fibre-based non-woven sheet comprises an organic coating only on one major surface of the sheet and a second substantially untreated surface. In that case, the sheet is suitably applied to the wet surfacer, so that the untreated sheet surface faces the wet surfacer.

In certain embodiments, it can be advantageous to treat the wet surfacer with a notched trowel or a toothed spatula prior to application of the glass fibre-based non-woven sheet.

The glass fibre-based non-woven sheet can be applied manually to the wet surfacer. Pressing the sheet slightly on the wet surfacer is generally sufficient to adhere the sheet to the surfacer. It should be noted that the sheet generally remains on the surfacer, rather than being pressed into the surfacer layer. Preferably, the pressure applied to the sheet is such that penetration of the wet surfacer through the interstices or pores of the sheet is minimized or entirely prevented.

As mentioned above, the process of the invention is very suitable for preparing a building surface for decoration. In one embodiment, the building surface may be an exterior building surface. Alternatively, the surface may be an interior building surface, such as a wall, ceiling, or floor. Examples of suitable decoration steps following the process of the invention are the application of paint, such as a wall paint, a wall paper, or a floor covering. Due to the excellent covering of cracks, holes, and other surface imperfections, the process can be implemented with particular advantage for renovation purposes of existing or old buildings.

The invention also relates to the multilayer structure which can be obtained by the process. The structure comprises
a) a surfacer layer comprising, on a dry basis
   i. 25 to 65% by weight of Portland cement,
   ii. 5 to 60% by weight of a light-weight filler,
   iii. 2 to 20% by weight of organic copolymer powder, and
   iv. optionally, further additives, and b) a glass fibre-based non-woven sheet having an area density in the range of 100 to 250 g/m², wherein one surface of the sheet is adhered to the surfacer layer.

The invention further relates to kit of parts suitable for carrying out the process. The kit comprises a) a dry material which can be mixed with water to form a surfacer material for a building surface, wherein the dry material comprises i) 25 to 65% by weight of Portland cement, ii) 5 to 60% by weight of a light-weight filler, iii) 2 to 20% by weight of organic copolymer powder, and iv) optionally, further additives, and b) a glass fibre-based non-woven sheet having an area density in the range of 100 to 250 g/m2 for adhering to said surfacer material.

## Claims

1. A process for preparing a building surface for decoration comprising the steps of
a) application of a water-based surfacer material to the building surface, wherein the surfacer comprises, on a dry basis:
i) 25 to 65% by weight of cementitious material,
ii) 5 to 60% by weight of a light-weight filler,
iii) 2 to 20% by weight of organic polymer powder, and
iv) optionally, further additives
b) application of a glass fibre-based non-woven sheet having an area density in the range of 100 to 250 g/m² onto the wet surfacer, and wherein one surface of the sheet is adhered to the wet surfacer.

2. The process according to claim 1, wherein the glass fibre-based non-woven sheet comprises an organic coating on one major surface of the sheet and a second substantially untreated surface, and wherein the untreated surface faces the wet surfacer.

3. The process according to claim 1 or 2, wherein the process comprises the additional step of cleaning the building surface and/or removing non-sustainable layers from the building surface prior to application of the water-based surfacer material.

4. The process according to any one of the preceding claims, wherein a base layer is applied prior to application of the water-based surfacer material.

5. The process according to any one of the preceding claims, wherein the light-weight filler has a density of less than 2,000 kg/m³

6. The process according to any one of the preceding claims, wherein the decoration comprises applying a wall paper or a wall paint.

7. The process according to any one of the preceding claims, wherein the building surface is an interior surface of a building.

8. The process according to any one of the preceding claims, wherein the process is implemented for renovation purposes.

9. The process according to any one of the preceding claims, wherein the surfacer is applied by spraying, rolling, or using a trowel.

10. The process according to any one of the preceding claims, wherein the wet surfacer is treated with a notched trowel or a toothed spatula.

11. A multilayer structure comprising
a) a surfacer layer comprising, on a dry basis
i) 25 to 65% by weight of Portland cement,
ii) 5 to 60% by weight of a light-weight filler,
iii) 2 to 20% by weight of organic copolymer powder, and
iv) optionally, further additives, and
b) a glass fibre-based non-woven sheet having an area density in the range of 100 to 250 g/m², and wherein one surface of the sheet is adhered to the surfacer layer.

12. A kit of parts for preparing a building surface for decoration comprising
a) a dry material which can be mixed with water to form a surfacer material for a building surface, wherein the dry material comprises
i) 25 to 65% by weight of Portland cement,
ii) 5 to 60% by weight of a light-weight filler,
iii) 2 to 20% by weight of organic copolymer powder, and
iv) optionally, further additives, and
b) a glass fibre-based non-woven sheet having an area density in the range of 100 to 250 g/ m2 for adhering to said surfacer material.

## Patentansprüche

1. Verfahren zur Herstellung einer Gebäudefläche zur Dekoration, umfassend die Schritte des
a) Aufbringens eines Haftvermittlermaterials auf Wasserbasis auf die Gebäudeoberfläche, wobei der Haftvermittler auf Trockenbasis umfasst:
i) 25 bis 65 Gewichts-% zementartiges Material,
ii) 5 bis 60 Gewichts-% leichten Füllstoff
iii) 2 bis 20 Gewichts-% organisches Polymerpulver, und
iv) gegebenenfalls weitere Zusatzstoffe
b) Aufbringens eines Vliesstoffs auf Glasfaserbasis mit einer Flächendichte im Bereich von 100 bis 250 g/m² auf den nassen Haftvermittler, und wobei eine Oberfläche des Stoffs an dem nassen Haftvermittler anhaftet.

2. Verfahren nach Anspruch 1, wobei der Vliesstoff auf Glasfaserbasis eine organische Beschichtung auf einer Hauptfläche des Stoffs und eine zweite im wesentlichen unbehandelte Oberfläche umfasst und wobei die unbehandelte Oberfläche dem nassen Haftvermittler zugewandt ist.

3. Verfahren nach Anspruch 1 oder 2, wobei das Verfahren den zusätzlichen Schritt des Reinigens der Gebäudefläche und/oder des Entfernens von nicht tragfähigen Schichten von der Gebäudefläche vor dem Aufbringen des Haftvermittlermaterials auf Wasserbasis umfasst.

4. Verfahren nach einem der vorhergehenden Ansprüche, wobei eine Basisschicht vor dem Aufbringen des Haftvermittlermaterials auf Wasserbasis aufgebracht wird.

5. Verfahren nach einem der vorhergehenden Ansprüche, wobei der leichte Füllstoff eine Dichte von weniger als 2.000 kg/m³ aufweist

6. Verfahren nach einem der vorhergehenden Ansprüche, wobei die Dekoration das Aufbringen einer Tapete oder einer Wandfarbe umfasst.

7. Verfahren nach einem der vorhergehenden Ansprüche, wobei die Gebäudefläche eine Innenfläche eines Gebäudes ist.

8. Verfahren nach einem der vorhergehenden Ansprüche, wobei der Prozess für Renovierungszwecke implementiert wird.

9. Verfahren nach einem der vorhergehenden Ansprüche, wobei der Haftvermittler durch Sprühen, Rollen oder unter Verwendung einer Kelle aufgebracht wird.

10. Verfahren nach einem der vorhergehenden Ansprüche, wobei der nasse Haftvermittler wird mit einer gezahnten Glättekelle oder einer Zahnspachtel behandelt wird.

11. Schichtstruktur, umfassend
a) eine Haftvermittlerschicht, die auf Trockenbasis umfasst
i) 25 bis 65 Gewichts-% Portlandzement,
ii) 5 bis 60 Gewichts-% leichten Füllstoff
iii) 2 bis 20 Gewichts-% organisches Copolymerpulver, und
iv) gegebenenfalls weitere Zusatzstoffe, und
b) einen Vliesstoff auf Glasfaserbasis mit einer Flächendichte im Bereich von 100 bis 250 g/m², und wobei eine Oberfläche des Stoffs an dem nassen Haftvermittler anhaftet.

12. Kit von Teilen zum Herstellen einer Gebäudefläche zur Dekoration, umfassend
a) ein trockenes Material, welches mit Wasser gemischt werden kann, um ein Haftvermittlermaterial für eine Gebäudefläche zu bilden, wobei das trockene Material umfasst
i) 25 bis 65 Gewichts-% Portlandzement,
ii) 5 bis 60 Gewichts-% leichten Füllstoff
iii) 2 bis 20 Gewichts-% organisches Copolymerpulver, und
iv) gegebenenfalls weitere Zusatzstoffe, und
b) einen Vliesstoff auf Glasfaserbasis mit einer Flächendichte im Bereich von 100 bis 250 g/m² zum Anhaften an dem Haftvermittlermaterial.

## Revendications

1. Procédé de préparation d'une surface de bâtiment pour décoration comprenant les étapes suivantes :
a) l'application d'un matériau d'apprêt à base d'eau sur la surface de bâtiment, dans lequel l'apprêt comprend sur une base sèche :
i) 25 à 65 % en poids de matériau cimenté,
ii) 5 à 60 % en poids d'une masse de remplissage au poids léger,
iii) 2 à 20 % en poids de poudre de polymère organique et
iv) en option d'autres additifs
b) l'application d'une feuille de non tissé à base de fibres de verre présentant une densité de surface dans la plage de 100 à 250 g/m² sur l'apprêt humide, et dans lequel une surface de la feuille est collée sur l'apprêt humide.

2. Procédé selon la revendication 1, dans lequel la feuille de non tissé à base de fibres de verre comprend un revêtement organique sur une surface principale de la feuille et une seconde surface sensiblement non traitée et dans lequel la surface non traitée fait face à l'apprêt humide.

3. Procédé selon la revendication 1 ou 2, dans lequel le procédé comprend l'étape supplémentaire de nettoyage de la surface de bâtiment et/ou l'étape de retrait de couches non durables de la surface de bâtiment avant l'application du matériau d'apprêt à base d'eau.

4. Procédé selon l'une quelconque des revendications précédentes, dans lequel une couche de base est appliquée avant l'application du matériau d'apprêt à base d'eau.

5. Procédé selon l'une quelconque des revendications précédentes, dans lequel la masse de remplissage au poids léger présente une densité inférieure à 2 000 kg/m³.

6. Procédé selon l'une quelconque des revendications précédentes, dans lequel la décoration comprend l'application d'un papier peint ou d'une peinture murale.

7. Procédé selon l'une quelconque des revendications précédentes, dans lequel la surface de bâtiment est une surface intérieure d'un bâtiment.

8. Procédé selon l'une quelconque des revendications précédentes, dans lequel le procédé est mis en oeuvre à des fins de rénovation.

9. Procédé selon l'une quelconque des revendications précédentes, dans lequel l'apprêt est appliqué par pulvérisation, laminage ou utilisation d'une truelle.

10. Procédé selon l'une quelconque des revendications précédentes, dans lequel l'apprêt humide est traité avec une truelle brettelée ou une spatule à dents.

11. Structure multicouche comprenant
a) une couche de d'apprêt comprenant sur une base sèche
i) 25 à 65 % en poids de ciment portland,
ii) 5 à 60 % en poids de masse de remplissage au poids léger,
iii) 2 à 20 % en poids de poudre de copolymère organique et
iv) en option d'autres additifs et
b) une feuille de non-tissé à base de fibres de verre présentant une densité de surface dans la plage de 100 à 250 g/m², et dans laquelle une surface de la feuille est collée à la couche d'apprêt.

12. Kit de pièces pour la préparation d'une surface de bâtiment pour la décoration comprenant :
a) un matériau sec qui peut être mélangé avec de l'eau pour former un matériau d'apprêt pour une surface de bâtiment, dans lequel le matériau sec comprend
i) 25 à 65 % en poids de ciment portland,
ii) 5 à 60 % en poids de masse de remplissage au poids léger,
iii) 2 à 20 % en poids de poudre de copolymère organique et
iv) en option d'autres additifs et
b) une feuille de non-tissé à base de fibres de verre présentant une densité de surface dans la plage de 100 à 250 g/m2, pour adhérer audit matériau d'apprêt.
